Europäisches Patentamt

European Patent Office

Office européen des brevets

(11) Veröffentlichungsnummer: **0 451 588 B1**

(12) **EUROPÄISCHE PATENTSCHRIFT**

(45) Veröffentlichungstag der Patentschrift: **15.11.95**

(51) Int. Cl.[6]: **C08G 63/676**, C09D 167/06

(21) Anmeldenummer: **91104623.3**

(22) Anmeldetag: **23.03.91**

(54) **Wasserlösliche, polymerisierbare Polyester.**

(30) Priorität: **07.04.90 DE 4011353**

(43) Veröffentlichungstag der Anmeldung:
**16.10.91 Patentblatt 91/42**

(45) Bekanntmachung des Hinweises auf die
Patenterteilung:
**15.11.95 Patentblatt 95/46**

(84) Benannte Vertragsstaaten:
**BE DE FR GB IT NL**

(56) Entgegenhaltungen:
**EP-A- 0 182 147**
**EP-A- 0 320 734**
**EP-A- 0 368 083**

(73) Patentinhaber: **Wolff Walsrode Aktiengesellschaft**
**Postfach 15 15**
**D-29655 Walsrode (DE)**

(72) Erfinder: **Kressdorf, Burkhard, Dr.**
**Ellinghäuser Strasse 15**
**W-3030 Walsrode (DE)**
Erfinder: **Lühmann, Erhard, Dipl.-Ing.**
**Kastanienweg 2**
**W-3036 Bomlitz 1 (DE)**
Erfinder: **Hoppe, Lutz, Dr.**
**Am Badeteich 8**
**W-3030 Walsrode (DE)**

(74) Vertreter: **Braun, Rolf, Dr. et al**
**Bayer AG**
**Konzernverwaltung RP**
**Patentabteilung**
**D-51368 Leverkusen (DE)**

EP 0 451 588 B1

**Beschreibung**

Die Erfindung betrifft neue, wasserlösliche, polymerisierbare, $\alpha$-$\beta$-ungesättigte Polyester für Lackanwendungen.

Aufgrund der gestiegenen Umweltschutzanforderungen finden Lacksysteme, die keinen oder nur einen geringen Anteil an organischen Lösungenmitteln aufweisen, ein wachsendes Interesse. Die Einstellung der notwendigen Verarbeitungsviskosität ist bei derartigen Systemen durch Einsatz von Wasser oder von copolymerisierbaren Reaktivverdünnern erreichbar. Bei den sogenannten Reaktivverdünnern handelt es sich um niedermolekulare, polymerisierbare Substanzen, die physiologisch bedenklich sind. Sie können zu starken Hautreizungen oder zur Sensibilisierung der Haut führen. Zudem sind sie häufig geruchsintensiv. Der je nach Viskositätseinstellung schwankende Anteil an Reaktivverdünnern im Lacksystem beeinflußt die Lackeigenschaften zum Teil erheblich. Durch den Einsatz von Wasser als Verdünnungsmittel können derartige Nachteile vermieden werden.

Wasserverdünnbare, polymerisierbare Lackbindemittel sind an sich bekannt. Sie sind jedoch im allgemeinen nicht in Wasser löslich, sondern nur emulgierbar. Diese Dispersionen stellen bisher meist Öl-in-Wasser-Dispersionen dar (DE-A-3 441 154, EP-A-0 290 684, DE-A-3 340 589). Diese Dispersionen sind nur aufwendig im Dissolver unter Einsatz von Emulgatoren oder sehr hohen Scherkräften herstellbar, und ihre Lagerstabilität ist begrenzt. Außerdem läßt sich die Applikationsviskosität bei diesen Dispersionen weniger gut einstellen als bei echten Lösungen. Bei der Holzlackierung wird mit Dispersionen im allgemeinen eine schlechtere Porenbenetzung erreicht als bei der Verwendung von Lacken, die echte Lösungen sind. Die Übertragbarkeit bei der technisch wichtigen Walzenapplikation ist bei Dispersion deutlich schlechter als bei echten Lösungen.

So sind die in der DE-A-3 241 264 beschriebenen strahlungshärtenden Bindemittel, die durch Cokondensation von Dicarbonsäuren und Acrylsäure mit Polyethylenglykol sowie oxalkylierten, 3- bis 6-wertigen Alkoholen hergestellt werden, nur in Wasser emulgierbar, jedoch nicht löslich. Die Verwendung von Acrylsäure zur Synthese dieser Polyester führt zu Produkten, die physiologische Probleme wie Haut- und Schleimhautreizungen hervorrufen können. Diese Produkte sind deshalb als reizende Arbeitsstoffe kennzeichnungspflichtig und damit nur mit erhöhten Sicherheitsvorkehrungen verarbeitbar.

In der DE-A-3 340 589 sind ähnliche Polyester beschrieben, die durch den höheren Anteil an Polyalkylenglykol wasserempfindlicher werden. Auch sie sind durch die Verwendung von Acrylsäure physiologisch bedenklich.

In der EP-A-0 320 734 werden ungesättigte, wasserlösliche Polyester bechrieben, die für die Strahlenhärtung geeignet sind. Diese Polyester enthalten Polyalkylenglykole mit einem hohen Alkylierungsgrad, die sich ungünstig auf die Filmeigenschaften auswirken. So sind der Griff, die Härte und die Wasserfestigkeit der ausgehärteten Bindemittel ungenügend. Bei der Herstellung dieser Polyester wird ebenfalls Acrylsäure eingesetzt.

In der DE-A-3 441 154 werden ungesättigte, vorzugsweise lineare Polyester beschrieben, die keine Acrylsäureeinheiten enthalten. Diese Polyester sind allerdings wiederum nicht wasserlöslich, sondern nur emulgierbar. Sie weisen daher die oben beschriebenen Nachteile der Emulsionen gegenüber den wasserlöslichen Produkten auf.

Aufgabe der vorliegenden Erfindung ist es, ein wasserlösliches polymerisierbares Lackbindemittel auf Polyesterbasis zur Verfügung zu stellen, das keine Acrylsäureeinheiten aufweist und nach der Härtung gute Lackeigenschaften, insbesondere verbesserten Verlauf, störungsfreie Oberflächen und Haftfestigkeit im Vergleich zu bekannten wasserlöslichen Polyestern, aufweist.

Gegenstand der Erfindung sind wasserlösliche (90 %ige wäßrige Proben mit einer Schichtdicke von 1 mm weisen bei Bestrahlung mit einem Licht der Wellenlänge 750 nm eine Transmission von mehr als 95% auf), polymerisierbare, $\alpha$-$\beta$-ungesättigte Polyester auf Basis eines einzigen Polyalkylenglykols A, einer $\alpha$-$\beta$-ungesättigten Polycarbonsäure D oder eines Anhydrids davon und wenigstens eines Allylether-funktionellen Alkohols E, dadurch gekennzeichnet, daß das Polyalkylenglykol A ein Molekulargewicht von 300 - 1.000 aufweist und daß der Polyester cokondensierte Einheiten, wenigstens eines alkoxylierten Triols B, welches keine ungesättigten Gruppen aufweist, enthält und gegebenenfalls cokondensierte Einheiten eines 4- bis 6-wertigen Polyols C.

Bevorzugte Polyalkylenglykole A sind Polyethylenglykole. Besonders bevorzugt sind Polyethylenglykole mit einem Molekulargewicht von 400 - 600.

Unter oxalkylierten, 3-wertigen bzw. 4- bis 6-wertigen Triolen B bzw. gegebenenfalls Polyolen C werden oxalkylierte und/oder oxpropylierte 3-wertige bzw. 4- bis 6-wertige aliphatische Alkohole verstanden. Bevorzugte alkoxylierte Triole B haben 3 bis 20 Mol Ethylen- oder Propylenoxid/Mol Triol. Vorzugsweise haben die Triole B ein Molekulargewicht von 250 - 600. Die Grundkörper der Triole B sind vorzugsweise 3-

2

wertige, aliphatische Alkohole, z.B. Glyzerin, Trimethylolpropan, Trimethylolethan, vorzugsweise Trimethylolpropan und Glyzerin, insbesondere Glyzerin. Bevorzugte alkoxylierte Polyole C haben mehr als drei Hydroxylgruppen und 1 - 20 Mol Ethylen- oder Propylenoxideinheiten pro Mol Polyol, vorzugsweise 1 - 5 Mol Ethylen- oder Propylenoxideinheiten pro Mol Polyol. Der Grundkörper der Polyole C besteht vorzugsweise aus gesättigten, aliphatischen, 4- bis 6-wertigen Alkoholen, z.B. Pentaerythrit, Dipentaerythrit, Erythrit, Sorbit, Di-trimethylolpropan, vorzugsweise Pentaerythrit.

Bei den Polycarbonsäuren D bzw. den Anhydriden der Polycarbonsäuren handelt es sich vorzugsweise um ungesättigte Dicarbonsäuren, besonders bevorzugt sind Anhydride von Dicarbonsäuren. Als Dicarbonsäuren kommen für die Herstellung der erfindungsgemäßen Polyester Maleinsäure, Chlormaleinsäure, Fumarsäure oder die Anhydride der genannten Dicarbonsäuren, sofern sie herstellbar sind, in Frage, vorzugsweise Maleinsäure, besonders bevorzugt Maleinsäureanhydrid.

Die Allylether-funktionellen Alkohole E enthalten neben mindestens einer veresterungsfähigen Hydroxylgruppe noch mindestens einen, vorzugsweise zwei oder mehr Allyletherreste.

Geeignete Alkohole sind z.B. Allyl-, Methallyl-, Ethallyl-, Chlorallyl-Ether verschiedener Alkohole, so z.B. Glyzerin-mono- oder -diallylether, Trimethylolethan-mono- oder -di-methallylether, Trimethylolpropan-mono- oder -diallylether, oxethylierte oder oxpropylierte Allyl-, Methallyl-, Ethallyl- oder Chlor-allylalkohole, 1,3,5-Hexantriol-mono- oder dichlor-allylether, Pentaerythrit-mono-, di- oder -triallylether, Buten(2,3)-diol-1,4-mono- oder -dioxyethylether, 2,2,6,6-Tetramethylolcyclohexanol-tetraallylether, Buten(2,3)-diol-1,4-monoallylether, gemischte Ether, wie Trimethylolpropan-monoallyl-monocrotylether und Pentaerythrit-mono- oder -diallyl-mono-benzylether, besonders bevorzugt sind Trimethylolpropan-mono- und -diallylether. In einer bevorzugten Ausführungsform werden die Koponenten A-E in folgenden Mengenverhältnissen eingesetzt.

| | |
|---|---|
| Polyalkylenglykol A: | 10-40 Gew.-Teile, |
| vorzugsweise: | 15-30 Gew.-Teile. |
| alkoxyliertes Polyol B: | 15-45 Gew.-Teile, |
| vorzugsweise: | 17-36 Gew.-Teile, |
| alkoxyliertes Polyol C: | 0-10 Gew.-Teile, |
| vorzugsweise: | 0,1-5 Gew.-Teile, |
| Polycarbonsäure D | 10-40 Gew.-Teile, |
| vorzugsweise: | 15-30 Gew.-Teile, |
| allyletherfunktioneller Alkohol E: | 15-40 Gew.-Teile, |
| vorzugsweise: | 20-35 Gew.-Teile |

Die Herstellung der Polyester kann nach bekannten Methoden, z.B. Schmelz- oder Azeotropveresterung der Alkohole und Säuren oder deren veresterungsfähigen Derivaten, z.B. ihrer Anhydride, erfolgen (vergleiche "Methoden der organischen Chemie", Houben-Weyl, 4. Auflage, Band 14-2, Georg-Thieme-Verlag, Stuttgart, 1961). Bevorzugt ist die Schmelzkondensation unter Inertgasatmosphäre bei Temperaturen von 140 - 200°C, vorzugsweise von 150 - 190°C.

Um die Polyester vor unerwünschter vorzeitiger Vernetzung zu bewahren, können bereits bei der Herstellung der Polyester Polymerisationsinhibitoren oder Antioxydantien zugesetzt werden; geeignete Stabilisatoren sind in "Methoden der organischen Chemie", Houben-Weyl, 4. Auflage, Band 14-1, Georg-Thieme-Verlag, Stuttgart, 1961, beschrieben. Dabei handelt es sich um die üblichen zur Verhinderung einer thermischen Polymerisation verwendeten Verbindungen, z.B. Phenole und Phenolderivate, vorzugsweise sterisch gehinderte Phenole, Amine, Nitrosamine, Chinone, Hydrochinon-Monoalkylether, Phenothiazine oder Phosphorigsäureester. Sie werden im allgemeinen in Mengen von 0,001 - 3 Gew.-%, vorzugsweise in Mengen von 0,005 - 0,5 Gew.-%, eingesetzt. Sehr gut geeignet ist Toluhydrochinon in einer Konzentration von 0,01 -0,05 Gew.-% Zur Beschleunigung der Reaktion können Veresterungskatalysatoren eingesetzt werden, Es eignen sich dazu organische und anorganische Sauren, z.B. Paratoluolsulfonsäure, Salzsäure oder konzentrierte Schwefelsäure. Bevorzugt ist Paratoluolsulfonsäure. Ebenfalls geeignet sind Basen und auch Metallsalze, wie z.B. Antimon-, Zinn-, Titan- und Bleiverbindungen (vergleiche Houben-Weyl, Band E 20, Georg-Thieme-Verlag, Stuttgart, 1987).

Die Reaktion wird bis zu einer Säurezahl des Polyesters von 1 - 50, vorzugsweise von 10 - 30 mg KOH/g Polyester, durchgeführt.

Zur Erzielung der angestrebten Produkteigenschaften ist insbesondere eine Verringerung der bei konventionellen Verfahren immer in starkem Maße auftretenden Nebenreaktionen der Polymerisierung der Allylgruppen durch Einstellung kurzer Reaktionszeiten notwendig.

Überraschenderweise sind die erfindungsgemäßen Lackbindemittel gut wasserlöslich und weisen auch gute Lackeigenschaften auf. Das erfindungsgemäße Bindemittel bildet im Wasser echte oder kolloidiale Lösungen. Unter kolloidialen Lösungen werden solche Lösungen verstanden, bei denen die Teilchengröße so gering ist, daß die Proben bei einer Schichtdicke von 1 mm und einer Wellenlänge von 750 nm eine Transmission von mehr als 95 % aufweisen. Im Vergleichsbeispiel 1 kann eine derartige Klarlöslichkeit nicht erreicht werden.

Weiterhin ist das Lackbindemittel in den üblichen organischen Lösungsmitteln und Reaktivverdünnern löslich.

Die erfindungsgemäßen Lackbindemittel können die zur Erzielung besonderer technischer Effekte notwendigen Komponenten, wie Füllstoffe, Pigmente, Farbstoffe, Thixotropiermittel, Glättmittel, Mattierungsmittel, Verlaufmittel usw., in üblichen Mengen enthalten. Die Lackeigenschaften können auf Wunsch durch Zusatz von Reaktivverdünnern oder weiteren hochmolekularen Lackbindemitteln entsprechend den jeweiligen Erfordernissen verändert werden, Sie können mit weiteren üblichen Lackrohstoffen kombiniert werden, wie z.B. Nitrocellulose, Polyacrylatharzen, Alkydharzen, ungesättigten Polyestern und weiteren strahlungshärtbaren Komponenten.

Geeignete Applikationsformen sind Spritzen, Walzen, Rakeln, Gießen, Streichen und Tauchen, Das erfindungsgemäße Bindemittel kann nach Verdunstung des Wassers polymerisiert werden, wobei man Lackschichten mit günstigen Oberflächeneigenschaften, vorzugsweise auf Holz, aber auch auf Kunststoffen und Metallen, erhält, Die Polymerisation kann thermisch und/oder unter Zusatz von Polymerisationsinitiatoren (z,B, Radikalbildnern) erfolgen, aber auch durch energiereiche Strahlung (UV-, Elektronen-, Röntgen- oder Gammastrahlen), wobei Photoinitiatoren zugesetzt werden können. Besonders bevorzugt ist die UV-Härtung.

Als Photoinitiatoren sind die für die Strahlungshärtung bekannten Verbindungen geeignet, z.B. aromatische Ketoverbindungen, Benzophenone, Alkylbenzophenone, halogenmethylierte Benzophenone, Michlers Keton, Anthron und halogenierte Benzophenone. Weiter geeignet sind 2,4,6-Trimethylbenzoyldiphenylphosphinoxid, Phenylglyoxylsäureester, Anthrachinon und sein zahlreichen Derivate, besonders Benzoin und seine Derivate, ferner Benzylketale und Hydroxyalkylphenone. Besonders bevorzugt sind Hydroxyalkylphenone und Benzophenon.

Die Härtung kann auch mit polymerisationsauslösenden Radikalbildnern erfolgen. Bevorzugt werden wasserlösliche Peroxide oder wäßrige Emulsionen der nichtwasserlöslichen Peroxide. Die Radikalbildner können in bekannter Weise mit Beschleunigern, wie z.B. den Schwermetallsalzen von Carbonsäuren, den Chelaten sowie den Acetaten, Naphthenaten oder Acetylactonaten dieser Metalle, kombiniert werden, Auch die Beschleuniger können entweder, falls sie wasserlöslich sind, in Form ihrer wäßrigen Lösung, anderenfalls als wäßrige Emulsion zugesetzt werden.

Beispiele

Herstellung der Polyester:

Die in der nachfolgenden Tabelle genannten Ausgangskomponenten wurden bei 150 - 180°C unter einem Stickstoffstrom der Schmelzkondensation unterworfen, bis die angegebene Säurezahl erreicht war. In allen Beispielen wurde die Kondensation in Gegenwart von 0,05 Gew.-% Toluhydrochinon durchgeführt.

4

Prüfung des Lackbindemittels:

Nach Zusatz von 3 Gew.-% des Gemisches 2-Hydroxy-2-methyl-1-phenyl-propan-on: Benzophenon (2 : 1) zu der 90 Gew.-%igen wäßrigen Lösung der Reaktionsprodukte gemäß den Beispielen 1 - 6 werden die Proben auf eine Glasplatte in einer Schichtdicke von 90 $\mu$m aufgerakelt, getrocknet und mit UV-Licht bestrahlt (80 W/cm). Darauf wird die Pendelhärte nach König (DIN 5157) bestimmt.

In gleicher Weise wird eine Holzplatte mit einer Schichtdicke von 30 $\mu$m beschichtet, getrocknet, mit UV-Licht bestrahlt; hierbei wurde sowohl der Verlauf als auch das Eindringen des Lackes in den Untergrund beurteilt.

Die klaren, zähflüssigen Produkte, die alle gut in Wasser löslich sind, ergeben transparente, elastische und sehr kratzfeste Filme. In allen Fällen wird ein sehr guter Verlauf erzielt, der Lack dringt nur unwesentlich in das Holz ein, und man erhält nach der UV-Härtung kraterfreie Oberflächen.

Vergleichsbeispiel:

Das Vergleichsbeispiel wird entsprechend Beispiel 4 der DE-A 3 441 154 nachgearbeitet. Das erhaltene Produkt ist nicht wasserlöslich, sondern nur emulgierbar, wie die Transmissionsmessung zeigt. Zudem dringt der Lack stark in das Holz ein. Daher ist dieses Produkt als Beschichtungsmittel wenig geeignet, Nach der UV-Härtung sind Störstellen (Krater) im Lackfilm zu sehen.

| Beispiele | 1 | 2 | 3 | 4 | 5 | 6 | 7 | Vergleichs-beispiel |
|---|---|---|---|---|---|---|---|---|
| Polyethylenglykol 400 | 16,9 | 29,3 | 17,5 | | 24,2 | 16,7 | 22,8 | |
| Polyethylenglykol 600 | | | | 23,1 | | | | 12,5 |
| Polyethylenglykol 1000 | | | | | | | | 12,5 |
| Propylenglykol | | | | | | | | |
| Tetraethoxyliertes Glyzerin | 35,8 | 17,6 | 35,0 | 30,4 | 21,2 | 30,3 | 26,0 | |
| Pentaethoxyliertes Pentaerythrit | | | | | | | | |
| Benzylalkohol | | | | | | 2,9 | | |
| Maleinsäureanhydrid | 24,7 | 22,3 | 25,8 | 23,5 | 22,9 | 25,5 | 24,7 | 12,9 |
| Trimethyloldiallylether | 24,5 | 30,8 | 21,7 | 22,5 | 31,7 | 24,5 | 23,7 | 38,3 |
| Trimethylolmonoallylether | | | | | | | 2,8 | 29,2 |
| Säurezahl (mg KOH/g) | 28 | 22 | 27 | 23 | 23 | 22 | 24 | 18 |
| Transmission (%) | >95 | >95 | >95 | >95 | >95 | >95 | >95 | 0,3 |
| Pendelhärte nach DIN 53157 90 µm auf Glas (S) | 57 | 42 | 62 | 50 | 70 | 75 | 43 | 55 |
| Verlauf | sehr gut | sehr gut | sehr gut | sehr gut | sehr gut | sehr gut | sehr gut | befriedigend |
| Verhalten auf Holz | kraterfreier Lackfilm, geringes Eindringen in den Untergrund | | | | | | | kleine Krater, starkes Eindringen in den Holzuntergrund |

## Patentansprüche

1. Wasserlösliche (90 %ige wäßrige Proben mit einer Schichtdicke Von 1 mm weisen bei Bestrahlung mit einem Licht der Wellenlänge 750 nm eine Transmission von mehr als 95 % auf), polymerisierbare, $\alpha$-$\beta$-

6

ungesättigte Polyester auf Basis eines einzigen Polyalkylenglykols A, einer $\alpha$-$\beta$-ungesättigten Polycarbonsäure D oder eines Anhydrids davon und wenigstens eines Allylether-funktionellen Alkohols E, dadurch gekennzeichnet, daß das Polyalkylenglykol A ein Molekulargewicht von 300 - 1.000 aufweist und daß der Polyester cokondensierte Einheiten, wenigstens eines alkoxylierten Triols B, welches keine ungesättigten Gruppen aufweist, enthält und gegebenenfalls cokondensierte Einheiten eines 4- bis 6-wertigen Polyols C.

2.  Polyester nach Anspruch 1, dadurch gekennzeichnet, daß das Polyalkylenglykol A ein Poylethylenglykol mit einem Molekulargewicht von 400 - 600 ist.

3.  Polyester nach wenigstens einem der vorhergehenden Ansprüche, dadurch gekennzeichnet, daß das Triol B mit Ethylen- oder Propylenoxid alkoxyliert ist.

4.  Polyester nach wenigstens einem der vohergehenden Ansprüche, dadurch gekennzeichnet, daß das alkoxylierte Triol B ein Molekulargewicht von 250 - 600 aufweist.

5.  Polyester nach wenigstens einem der vorhergehenden Ansprüche, dadurch gekennzeichnet, daß das Triol B auf Basis von Trimethylolpropan oder Glyzerin beruht.

6.  Polyester nach wenigstens einem der vorhergehenden Ansprüche, dadurch gekennzeichnet, daß die Dicarbonsäure D Maleinsäure, Chlormaleinsäure oder Fumarsäure ist,

7.  Polyester nach wenigstens einem der vorhergehenden Ansprüche, dadurch gekennzeichnet, daß der allyletherfunktionelle Alkohol E Trimethylolpropandiallylether und/oder Trimethylolpropanmonoallylether ist.

8.  Polyester nach wenigstens einem der vorhergehenden Ansprüche, dadurch gekennzeichnet, daß er beruht auf

| Polyalkylenglykol A: | 10-40 Gew.-Teile, |
| alkoxyliertes Polyol B: | 15-45 Gew.-Teile, |
| alkoxyliertes Polyol C: | 0-10 Gew.-Teile, |
| Polycarbonsäure D | 10-40 Gew.-Teile, |
| allyletherfunktioneller Alkohol E: | 15-40 Gew.-Teile. |

9.  Verwendung des Polyesters gemäß wenigstens einem der vorhergehenden Ansprüche zur Oberflächenbeschichtung.

**Claims**

1.  Water-soluble (90% aqueous samples with a layer thickness of 1 mm have a transmission of more than 95% on exposure to light with a wavelength of 750 nm), polymerizable, $\alpha,\beta$-unsaturated polyesters based on a single polyalkylene glycol A, an $\alpha,\beta$-unsaturated polycarboxylic acid D or an anhydride thereof and at least one allyl-ether-functional alcohol E, characterized in that the polyalkylene glycol A has a molecular weight of 300 to 1,000 and in that the polyester contains co-condensed units of at least one alkoxylated triol B, which does not have any unsaturated groups, and optionally co-condensed units of a tetrahydric to hexahydric polyol C.

2.  Polyesters as claimed in claim 1, characterized in that the polyalkylene glycol A is a polyethylene glycol having a molecular weight of 400 to 600.

3.  Polyesters as claimed in at least one of the preceding claims, characterized in that the triol B is alkoxylated with ethylene or propylene oxide.

4.  Polyesters as claimed in at least one of the preceding claims, characterized in that the alkoxylated triol B has a molecular weight of 250 to 600.

**5.** Polyesters as claimed in at least one of the preceding claims, characterized in that the triol B is based on trimethylol propane or glycerol.

**6.** Polyesters as claimed in at least one of the preceding claims, characterized in that the dicarboxylic acid D is maleic acid, chloromaleic acid or fumaric acid.

**7.** Polyesters as claimed in at least one of the preceding claims, characterized in that the allyl-ether-functional alcohol E is trimethylol propane diallyl ether and/or trimethylol propane monoallyl ether.

**8.** Polyesters as claimed in at least one of the preceding claims, characterized in that it is based on

| | |
|---|---|
| polyalkylene glycol A: | 10 to 40 parts by weight, |
| alkoxylated polyol B: | 15 to 45 parts by weight, |
| alkoxylated polyol C: | 0 to 10 parts by weight, |
| polycarboxylic acid D: | 10 to 40 parts by weight, |
| allyl-ether-functional alcohol E: | 15 to 40 parts by weight. |

**9.** The use of the polyester claimed in at least one of the preceding claims for surface coating.

**Revendications**

**1.** Polyester insaturé en $\alpha$-$\beta$ hydrosoluble (des échantillons aqueux à 90 % ayant une épaisseur de couche de 1 mm présentent, par rayonnement avec une lumière de longueur d'onde de 750 nm, un coefficient de transmission de plus de 95 %), polymérisable à base d'un seul polyalkylèneglycol A, d'un acide polycarboxylique D insaturé en $\alpha$-$\beta$ ou d'un anhydride de celui-ci et d'au moins un alcool E portant au moins une fonction éther allylique, caractérisé en ce que le polyalkylèneglycol A présente un poids moléculaire de 300 à 1.000 et en ce que le polyester contient des unités cocondensées d'au moins un triol alcoxylé B ne présentant pas de groupes insaturés et éventuellement des unités cocondensées d'un polyol tétravalent à hexavalent C.

**2.** Polyester selon la revendication 1, caractérisé en ce que le polyalkylèneglycol A est un polyéthylèneglycol ayant un poids moléculaire de 400 à 600.

**3.** Polyester selon au moins une des revendications précédentes, caractérisé en ce que le triol B est alcoxylé avec de l'éthylèneoxyde ou du propylèneoxyde.

**4.** Polyester selon au moins l'une des revendications précédentes, caractérisé en ce que le triol alcoxylé B présente un poids moléculaire de 250 à 600.

**5.** Polyester selon au moins l'une des revendications précédentes, caractérisé en ce que le triol B est à base de triméthylpropane ou de glycérine.

**6.** Polyester selon au moins l'une des revendications précédentes, caractérisé en ce que l'acide dicarboxylique D est l'acide maléique, l'acide chloromaléique ou l'acide fumarique.

**7.** Polyester selon au moins l'une des revendications précédentes, caractérisé en ce que l'alcool E portant au moins une fonction éther allylique est un éther triméthylolpropanediallylique et/ou un éther triméthylolpropanemonoallylique.

**8.** Polyester selon l'une quelconque des revendications précédentes, caractérisé en ce qu'il contient

| | |
|---|---|
| polyalkylèneglycol A: | 10-40 parties en poids, |
| polyol alcoxylé B: | 15-45 parties en poids, |
| polyol alcoxylé C: | 0-10 parties en poids, |
| acide polycarboxylique D: | 10-40 parties en poids, |
| alcool E portant au moins une fonction éther allylique: | 15-40 parties en poids. |

9. Mise en oeuvre du polyester selon au moins l'une des revendications précédentes en vue du revêtement des surfaces.